# FASCICULE DE BREVET EUROPEEN

(11) **EP 2 698 574 B1**
(45) Date de publication et mention de la délivrance du brevet: **05.10.2016**
(21) Numéro de dépôt: 13179379.6
(22) Date de dépôt: 06.08.2013
(51) Int. Cl.: F16L 29/04

(54) **Connecteur pour tuyaux de raccordement de système de climatisation et appareil de climatisation associé**
Anschlussstück für Verbindungsrohre eines Klimaanlagensystems, und entsprechendes Klimaanlagengerät
Connector for connecting pipes of an air-conditioning system and associated air-conditioning device

(30) Priorité: 16.08.2012 FR 1257825
(43) Date de publication de la demande: 19.02.2014
(73) Titulaire: Mazigh, Patrice, 06200 Nice (FR)
(72) Inventeur: Mazigh, Patrice, 06200 Nice (FR)
(74) Mandataire: Decobert, Jean-Pascal

(56) Documents cités:
- EP-A1- 2 388 501
- FR-A1- 2 831 644
- US-A- 3 380 476

## Description

L'invention concerne un connecteur pour relier les tuyaux d'un système de climatisation, ces tuyaux pouvant relier diverses unités de climatisation dudit système.

L'invention trouvera son utilisation pour l'interconnexion hermétique sous pression lors du montage d'appareils de climatisation notamment pour des appareils de climatisation de type bi-blocs muraux.

Un tel système de climatisation comprend une unité intérieure et au moins une unité extérieure reliées entre elles par des tuyaux de raccordement.

Une méthode conventionnelle pour installer un climatiseur, de sorte à expulser l'air de l'unité intérieure et l'air dans les tuyaux de raccordement après l'installation, consiste à charger en gaz réfrigérant la partie principale de l'unité extérieure jusqu'à un volume en excès par rapport au volume spécifié requis pour l'utilisation de la fonction air conditionné du système. Cet excès de gaz réfrigérant permet de purger l'air présent dans le reste du circuit. On utilise à cet effet une valve deux voies au niveau de l'unité extérieure de sorte que, une fois l'installation terminée, la circulation du gaz réfrigérant expulse l'air dans l'atmosphère. Ce procédé traditionnel est particulièrement dommageable pour l'environnement puisqu'il induit un dégazage de gaz réfrigérant dans l'atmosphère particulièrement nuisible, notamment par la destruction de la couche d'ozone.

On a donc cherché à proposer des dispositifs évitant de telles fuites de gaz réfrigérant dans l'atmosphère. En ce sens, une fois la connexion entre les unités intérieure et extérieure faite de façon traditionnelle par une liaison en cuivre qui se raccorde à l'unité intérieure et à l'unité extérieure par un écrou à serrer sur un filetage, il faut une intervention d'un frigoriste pour limiter les risques de dégazage dans l'atmosphère et éviter le tirage au vide de l'installation. Cette étape nécessite non seulement l'intervention d'un professionnel qualifié mais aussi l'emploi d'un matériel adéquat et souvent coûteux pour le pompage. En outre, les risques de dégazage ne sont en tout état de cause pas totalement supprimés.

On connaît du document US-A-3 994 317 un connecteur comprenant une partie mâle et une partie femelle chacune munie d'un piston monté sur ressort. L'accouplement des deux parties respectivement mâle et femelle produit un mouvement relatif du piston par rapport à son siège et l'ouverture d'un canal de passage fluidique. Un autre connecteur est présenté dans la publication EP-A1-2 388 501.

Le document US3380476 divulgue un couplage pour système fluidique dans lequel on commande l'ouverture des valves avec un système complexe de verrous.

Le problème à la base de la présente invention est de permettre le positionnement d'un connecteur dans un circuit de climatisation qui, d'une part, soit à la fois d'une fermeture hermétique jusqu'à sa connexion définitive tout en pouvant être facilement mis en position de connexion définitive et, d'autre part, qui soit tel que les mises en connexion successives n'altèrent pas les éléments internes qu'il contient.

A cet effet, la présente invention concerne un connecteur de tuyau de circuit de climatisation comprenant une première partie et une deuxième partie destinées à coopérer de sorte que le connecteur soit alternativement dans une position connectée ou une position déconnectée, la première partie comprenant un premier corps longitudinal ménageant un passage traversant recevant une soupape mobile, ledit passage logeant un premier ressort destiné à maintenir la soupape en contact étanche avec le premier corps longitudinal lorsque le connecteur est en position déconnectée, le corps longitudinal comprenant une butée interne contre laquelle la soupape est destinée à être en contact par défaut sous l'action d'un premier ressort au moins lorsque le connecteur est en position déconnectée et la deuxième partie comprenant un deuxième corps longitudinal ménageant un passage traversant ainsi qu'un manchon mobile et un piston, le piston étant placé au moins partiellement dans le manchon placé au moins partiellement dans le deuxième corps longitudinal et le piston étant fixe relativement au deuxième corps longitudinal au moyen d'une bague de maintien sur laquelle le piston est fixé, un second ressort étant placé entre la bague de maintien et le manchon dans le deuxième corps longitudinal de sorte à maintenir le contact contre la butée interne du premier corps longitudinal lorsque le connecteur est en position connectée, ledit connecteur étant caractérisé par le fait que les raideurs des premier et second ressorts sont identiques ou avec un écart inférieur à 4 newtons par millimètre. On peut ainsi disposer d'un système équilibré. La somme des raideurs des deux ressorts est comprise entre 18 et 40 newtons par millimètre. Les ressorts sont est ainsi constitués de sorte à n'être ni facilement actionnables lorsque le connecteur est en position déconnectée ni trop difficiles à accoupler lors de la mise en position connectée du connecteur.

L'effet technique est de pouvoir fermer hermétiquement les deux parties du connecteur jusqu'à sa mise en connexion définitive. Avec une raideur comprise entre 18 et 40 N/mm, le piston et la soupape sont difficilement actionnables de manière intempestive en garantissant une étanchéité parfaite tout en permettant de ne pas rendre trop difficile le montage du connecteur pour la mise en circulation du gaz traversant le connecteur. De plus, avec des raideurs de ressort sensiblement identiques dans les deux parties du connecteur, il y a une répartition des pressions équivalentes pour les deux parties du connecteur et donc une sollicitation uniforme des éléments présents dans le connecteur comme les joints. On entend par identique ou sensiblement identique que la raideur des ressorts est équivalente aux tolérances de mesures et de fabrication près.

En effet, le demandeur a constaté qu'un inconvénient des connecteurs connus jusqu'à présent est qu'ils ne garantissent pas une faculté d'accoupler facilement les parties mâles et femelles du connecteur, tout en évitant la possibilité d'ouvrir manuellement le connecteur lorsque les deux parties sont désaccouplées. Il s'ensuit un problème de sécurité et des risques de fuite. En outre, afin d'assurer efficacement la mobilité des pistons et d'éviter les risques de coincement ou d'usure prématurée des joints, il existe un fort besoin dans l'état de la technique pour un connecteur dont le déplacement des pistons est équilibré. Ce problème d'équilibrage est en lui-même nouvellement exprimé grâce à l'invention. En effet, il semble que l'état de la technique n'ait jamais détecté cette difficulté. Or cela peut nuire au bon fonctionnement et notamment à la répartition des charges lors du couplage, d'où d'éventuels désaxages, frottements ou blocage.

En ce qui concerne le choix des raideurs, on notera que US3880476 s'oriente vers une solution à chambre ventouse (appelée suction chamber) et dissuade donc l'homme du métier de la recherche dans une sélection de raideurs précise d'une solution au problème de la sécurité du couplage et de la facilité du montage.

Le connecteur selon l'invention pourra en outre présenter au moins facultativement l'une quelconque des caractéristiques suivantes :
- les raideurs des ressorts sont comprises entre 7 et 22 N/mm avec une sélection de valeurs de raideurs pour chaque / un ressort de 7 et 11 N/mm et une sélection de valeurs de raideurs pour chaque / l'autre ressort de 18 et 22 N/mm.
- le rapport de l'écart des raideurs des premier et second ressorts sur la somme des raideurs des premier et second ressorts varie de 0 à 0,22.
- le rapport est compris entre 0 et 0,1.
- une des première ou deuxième parties comprend un filetage extérieur sur lequel vient se visser un moyen de serrage porté par l'autre des deuxième ou première parties.
- le filetage extérieur comprend 7 à 10 filets et présente un diamètre extérieur de 20 à 25 mm et une longueur totale de 14 à 15 mm.
- le filetage extérieur restant et non en prise, en position de connecteur monté, est de 2,5 à 3 mm.
- le moyen de serrage est sous la forme d'une bague recevant en son intérieur le filetage extérieur de la première ou deuxième partie.
- la bague est portée par la deuxième partie, le filetage extérieur étant porté par l'extrémité de la première partie en vis-à-vis de la deuxième partie lors du montage du connecteur.
- le serrage du moyen de serrage entraîne le déplacement de la soupape relativement au premier corps longitudinal par poussée du piston supprimant l'étanchéité de la soupape et le déplacement du manchon relativement au piston supprimant l'étanchéité entre le piston et le manchon de sorte à permettre la circulation du flux entre la première et la deuxième partie.
- la soupape est munie d'au moins un moyen d'étanchéité assurant l'étanchéité par défaut avec le premier corps longitudinal au moins en position déconnectée.
- au moins le piston est muni d'au moins un moyen d'étanchéité assurant l'étanchéité par défaut avec le manchon, le manchon comprenant au moins deux joints dont au moins l'un est destiné à assurer l'étanchéité permanente avec le deuxième corps longitudinal et dont au moins l'autre est destiné à assurer l'étanchéité avec le premier corps lorsque le connecteur est en position connectée.
- le piston est configuré pour être en contact avec la soupape lorsque le connecteur est en position connectée.

L'invention concerne aussi un appareil de climatisation comportant une unité extérieure et au moins une unité intérieure, les unités extérieure et intérieure présentant respectivement un circuit extérieur empli d'un fluide réfrigérant ou un circuit intérieur, les deux circuits étant reliés par un tel connecteur.

Avantageusement, deux tuyaux de raccordement relient respectivement l'entrée du circuit extérieur de l'unité extérieure à la sortie du circuit intérieur de l'unité intérieure ou la sortie du circuit extérieur de l'unité extérieure à l'entrée du circuit intérieur de l'unité intérieure, un connecteur étant prévu à chaque extrémité de chaque tuyau.

Avantageusement, chaque connecteur présente un de ses corps longitudinaux comportant le ressort avec la raideur la moins élevée disposé du côté de l'unité intérieure ou extérieure tandis que l'autre corps longitudinal comportant le ressort avec la raideur la plus élevée est disposé du côté du tuyau de raccordement.

D'autres buts et avantages de la présente invention apparaîtront au cours de la description qui suit d'un mode de réalisation préféré de l'invention, cependant non limitatif. Les dessins ci-joints sont ainsi donnés à titre d'exemples et ne sont pas limitatifs de l'invention. Ils représentent seulement un mode de réalisation de l'invention et permettront de la comprendre aisément.
La figure 1 est une vue de la première partie du connecteur.
La figure 1a est une vue agrandie d'une portion du filetage extérieur à l'extrémité de la première partie du connecteur.
La figure 2 est une vue en coupe BB de la première partie du connecteur selon la figure 1.
La figure 3 est une vue de la deuxième partie du connecteur.
La figure 4 est une vue en coupe BB de la deuxième partie du connecteur selon la figure 3.

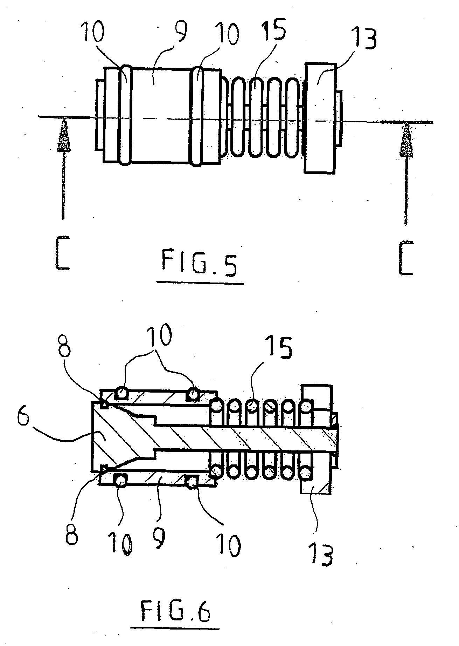

La figure 5 est une vue du manchon d'étanchéité selon l'invention.
La figure 6 est une vue en coupe CC selon la figure 5 du manchon d'étanchéité.
La figure 7 est une vue du connecteur connecté sans circulation du fluide.
La figure 8 est une vue en coupe du connecteur selon la figure 7.
La figure 9 est une vue du connecteur avec la première partie et la deuxième partie connectées avec circulation du fluide.
La figure 10 est une vue en coupe AA du connecteur selon la figure 9.
La figure 11 est une vue de détail selon la figure 10.
La figure 12 illustre un mode de réalisation d'un appareil de climatisation selon l'invention.

L'invention concerne un connecteur de raccordement pour les tuyaux de climatisation. On entend par tuyau, une canalisation ou un conduit qui peut être souple ou rigide et destinée à l'écoulement d'un fluide, par exemple un liquide ou un gaz. Ces tuyaux peuvent être des éléments de circulation du fluide en étant raccordés à des unités intérieure et extérieure formant un appareil de climatisation.

Le connecteur selon l'invention comprend une première partie 1 préférentiellement destinée à être reliée à une unité extérieure 16 d'un appareil de climatisation et une deuxième partie 2 pouvant être destinée à être reliée à une unité intérieure 17 d'un appareil de climatisation, mais ceci n'est pas obligatoire.

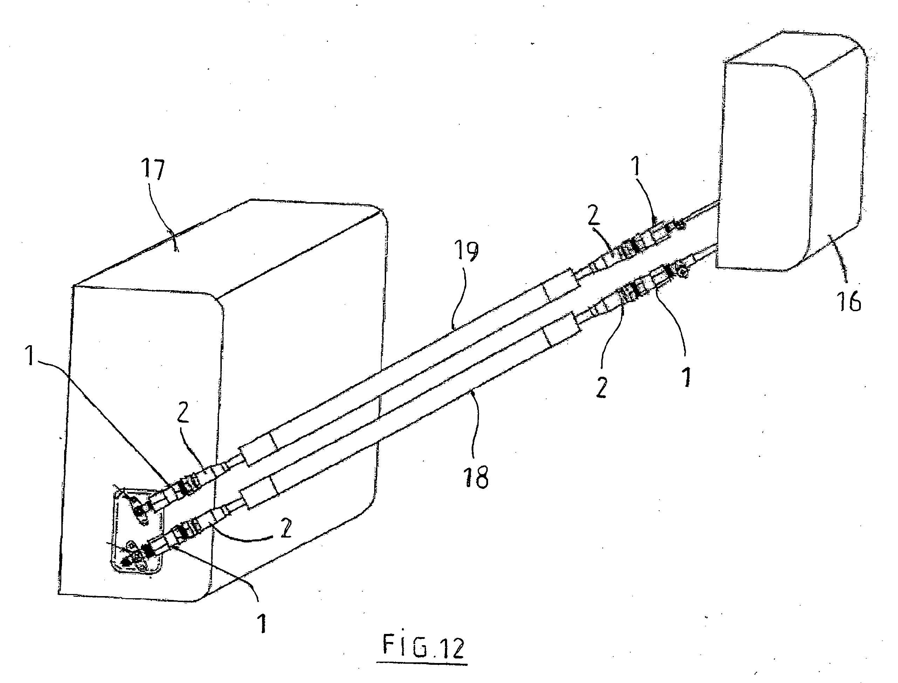

Une autre forme de réalisation d'un appareil de climatisation avec un autre positionnement des connecteurs sera détaillée ultérieurement en regard de la figure 12.

De manière générale, selon la présente invention, les connecteurs sont positionnés dans un appareil de climatisation selon les raideurs présentées par les ressorts logés respectivement dans les première et deuxième parties, comme il sera expliqué ultérieurement, notamment en regard de la figure 12.

La première partie 1 et la deuxième partie 2 sont destinées à coopérer de sorte à permettre le raccordement des tuyaux auxquels elles sont fixées.

Lorsque la première partie 1 et la deuxième partie 2 sont connectées, le connecteur est en position connectée. Inversement, lorsque la première partie 1 et la deuxième partie 2 sont déconnectées, le connecteur est en position déconnectée.

On entend par position déconnectée que la première partie 1 et la deuxième partie 2 du connecteur ne sont pas raccordées. Il n'y a pas alors de passage de fluide à travers le connecteur. A l'inverse, on entend par position connectée celle où la première partie 1 et la deuxième partie 2 du connecteur sont raccordées qu'il y ait ou non possibilité de passage du fluide.

La première partie 1 comprend un premier corps longitudinal 3 ménageant un passage traversant permettant l'écoulement du fluide. Le premier corps longitudinal 3 comprend dans le passage traversant une soupape mobile 5 fermée par défaut. La soupape 5 est munie d'au moins un moyen d'étanchéité 7 assurant l'étanchéité par défaut avec le premier corps longitudinal 3 au moins lorsque le connecteur est en position déconnectée.

Le premier corps longitudinal 3 comprend une butée interne 11 contre laquelle la soupape 5 est destinée à être en contact par défaut.

La soupape 5 est maintenue fermée par défaut au moyen d'un premier élément élastique tel qu'un ressort 14 disposé entre la soupape 5 et préférentiellement le premier corps longitudinal 3. Avantageusement, la butée interne 11 est formée dans le premier corps longitudinal 3 dans sa partie proximale 20, c'est-à-dire à l'extrémité destinée à être raccordée à la deuxième partie 2 du connecteur. De manière similaire, l'extrémité proximale de la deuxième partie 2 est celle destinée à être raccordée à la première partie 1.

Selon cette disposition représentée sur l'ensemble des figures, la soupape 5 comprend une tête sur laquelle sont positionnés des moyens d'étanchéité 7 qui sont en contact par défaut avec la surface distale de la butée interne 11, préférentiellement au moyen du premier ressort 14 disposé au niveau de la tige de la soupape 5. La surface distale de la butée interne 11 est constituée par la surface faisant face à l'extrémité distale de la première partie 1. Le moyen d'étanchéité 7 exerce un appui axial orienté suivant l'axe longitudinal de la soupape 5 sur la butée interne 11.

Ainsi, lorsque la première partie 1 est reliée à l'unité extérieure 16, il n'y a pas de risque d'introduction de gaz ou d'humidité ou de perte de l'effet de vide réalisé au niveau de l'unité extérieure 16.

La deuxième partie 2 du connecteur selon l'invention comprend un deuxième corps longitudinal 4 ménageant un passage traversant permettant l'écoulement du fluide. Dans le passage traversant est placé un manchon mobile 9 et un piston 6. Le manchon 9 est avantageusement placé au moins partiellement dans le deuxième corps longitudinal 4 et reçoit le piston 6 en son intérieur.

Préférentiellement, le piston 6 est muni d'au moins un moyen d'étanchéité 8 assurant l'étanchéité par défaut avec le manchon 9. Préférentiellement, cette étanchéité est réalisée au niveau de l'extrémité proximale de la deuxième partie 2. Ce moyen d'étanchéité 8 est préférentiellement un joint torique agencé sur le piston 6. Ce moyen d'étanchéité 8 est plus précisément placé sur la tête conique du piston 6 de sorte à coopérer avec l'extrémité proximale du manchon 9. Le manchon 9 présente avantageusement au niveau de son extrémité proximale une surface biseautée vers l'intérieur du manchon destiné à coopérer avec la tête conique du piston 6. L'appui du moyen d'étanchéité 8 sur le manchon 9 est un appui mixte comprenant une composante axiale et une composante radiale.

Selon l'invention, le manchon 9 comprend au moins deux joints 10. Au moins un joint 10 est destiné à assurer l'étanchéité par défaut entre le deuxième corps longitudinal 4 et le manchon 9. Au moins un autre joint 10 est quant à lui destiné à assurer l'étanchéité avec le premier corps longitudinal 3 lorsque la première partie 1 et la deuxième partie 2 sont raccordées. Selon une possibilité préférée, les joints 10 sont des joints toriques.

Lorsque la première partie 1 et la deuxième partie 2 sont déconnectées, la deuxième partie 2 est hermétique et ne permet pas la sortie du gaz réfrigérant, par exemple en dehors d'une unité intérieure 17 de l'appareil de climatisation.

Selon un mode préféré de l'invention, le piston 6 et la butée interne 11 sont configurés pour ne pas entrer en contact. Le piston 6 est configuré pour coopérer avec la soupape 5. Selon le mode de réalisation représenté, le piston 6 présente un diamètre inférieur à celui du passage formé par la butée interne 11.

De même, le manchon 9 est configuré pour entrer en contact avec la butée interne 11.

Le piston 6 est monté fixe sur le deuxième corps longitudinal 4 préférentiellement au moyen d'une bague de maintien 13. La tige du piston 6 est montée fixe au niveau de la bague de maintien 13. La bague de maintien 13 est placée au niveau de l'extrémité distale de la deuxième partie 2.

Selon une possibilité, le positionnement du piston 6 peut être contrôlé en fonction du positionnement de la bague de maintien 13.

La bague de maintien 13 constitue une butée pour un second élément élastique tel qu'un ressort 15 destiné à être positionné entre la bague de maintien 13 et le manchon 9 de sorte à maintenir le manchon 9 partiellement en dehors du deuxième corps longitudinal 4.

Conformément à la présente invention, les raideurs des premier et second ressorts 14, 15 sont sensiblement identiques ou avec un écart inférieur à 4 newtons par millimètre de sorte à disposer d'un système équilibré. De plus, la somme des raideurs des deux ressorts est comprise entre 18 et 40 newtons par millimètre. Cela permet aux ressorts 14, 15 de n'être ni facilement actionnables, lorsque le connecteur est en position déconnectée, ni trop difficiles à accoupler, lors de la mise en position connectée du connecteur.

Le connecteur selon l'invention comprend avantageusement un moyen de serrage 12 porté par l'une des première et deuxième parties 1, 2 coopérant avec un moyen complémentaire porté par l'autre de la première ou deuxième parties 1, 2. Le moyen de serrage 12 et son moyen complémentaire permettent, lors du raccordement de la première partie 1 et de la deuxième partie 2, de les rapprocher et de les maintenir en position. Selon une possibilité préférée, le rapprochement est progressif.

Préférentiellement, tel que représenté sur l'ensemble des figures, le moyen de serrage 12 et son moyen complémentaire sont constitués d'éléments mâle/femelle de filetage. Avantageusement, la première partie 1 présente une extrémité destinée à être en vis-à-vis de la deuxième partie 2 qui comprend un filetage extérieur 12a, ce filetage extérieur 12a illustrant le moyen complémentaire. La deuxième partie 2 comprend un moyen de serrage avantageusement sous la forme d'une bague de maintien 12 pouvant se visser sur le filetage extérieur 12a présent à l'extrémité de la première partie 1.

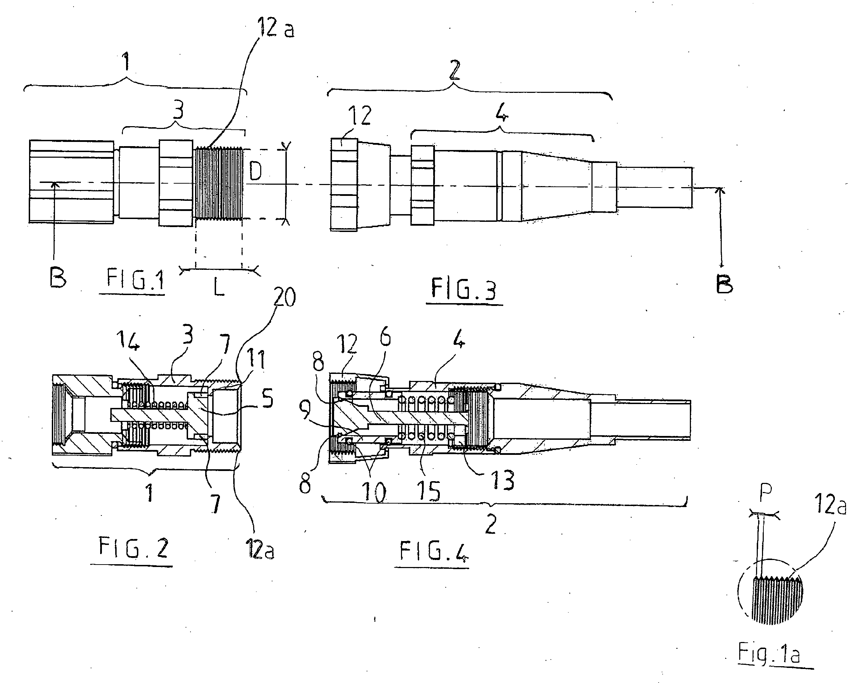

Avantageusement, comme il peut être vu à la figure 1, le filetage extérieur 12a présente un diamètre D pouvant varier entre 20 à 25 mm, ainsi qu'une longueur totale L pouvant varier de 13 à 16 mm. Un tel filetage extérieur 12a peut comprendre 7 à 10 filets avec un pas P de 1,5 mm.

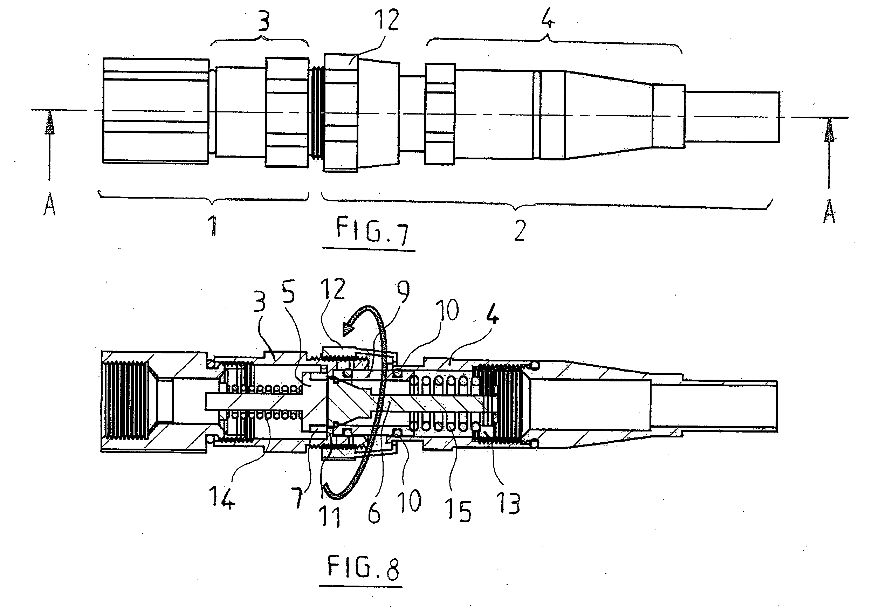

En se référant notamment à la figure 8, le premier ressort 14 coopérant avec la soupape 5 dans le corps longitudinal 3 de la première partie 1 peut présenter une raideur de 8,4 N par millimètre tandis que le second ressort 15 entourant le piston 6 dans le corps longitudinal 4 de la deuxième partie 2 présente une raideur de 11,7 N par millimètre, ce qui donne une somme des raideurs des deux ressorts 14 et 15 égale à 20,2 et un écart des raideurs de 3,3.

Dans une autre forme de réalisation, le premier ressort 14 du corps longitudinal 3 de la première partie 1 présente une raideur de 18N par millimètre tandis que le second ressort 15 du corps longitudinal 4 de la deuxième partie présente une raideur de 16,7 N par millimètre, ce qui donne une somme des raideurs des deux ressorts 14 et 15 égale à 34,7 et un écart des raideurs de 3,3.

Dans une autre forme de réalisation, le premier ressort 14 du corps longitudinal 3 de la première partie 1 présente une raideur de 8,4 N par millimètre tandis que le second ressort 15 du corps longitudinal 4 de la deuxième partie présente une raideur de 11,2 N par millimètre, ce qui donne une somme des raideurs des deux ressorts 14 et 15 égale à 19,6 et un écart des raideurs de 2,8.

De manière générale, les raideurs de chaque ressort 14, 15 peuvent être comprises par exemple entre 7 et 22 N/mm avec une sélection de valeurs de raideurs de chaque ressort respectivement de la première et de la deuxième partie ou inversement à 7 et 11 N/mm et une sélection de valeurs de raideurs de chaque ressort respectivement de la première et de la deuxième partie ou inversement 18 et 22 N/mm.

Le rapport de l'écart des raideurs sur la somme des raideurs peut varier de 0 à 0,22. Ce rapport est avantageusement compris entre 0 et 0,1 afin que les deux ressorts 14 et 15 ne soient pas trop facilement actionnables quand le connecteur est démonté.

Il peut aussi être vu que, dans le cadre de la présente invention, ce n'est pas toujours les ressorts 14 ou 15 de la même partie 1, 2 du connecteur qui présentent les raideurs les plus élevées. Cela peut aussi bien être la première partie 1 que la deuxième partie 2.

Le procédé de montage des première et deuxième parties 1, 2 comprend les étapes suivantes.

Les moyens de filetage 12, 12a respectifs des première et deuxième parties 1, 2 sont mis en coopération et vissés progressivement, ce qui débute par exemple pour une longueur de filetage, restante et non en prise, égale à 12,4 mm ou 12,3 mm pour un filetage de longueur totale de 14 mm. Au-delà d'une certaine profondeur de vissage, laissant par exemple un filetage, restant et non en prise, de 7,5 à 7,7 mm, le piston 6 vient en appui sur la soupape 5. De même, le manchon 9 vient en contact avec la butée interne 11.

Préférentiellement, le manchon 9 entre en contact par son extrémité proximale avec la surface proximale de la butée interne 11. A ce stade, représenté aux figures 7 et 8, bien que la première partie 1 et la deuxième partie 2 du connecteur soient raccordées, la profondeur de vissage du moyen de serrage 12 n'est pas suffisante et, de ce fait, la soupape 5 et le piston 6 sont toujours fermés par défaut. De plus, à cette étape, le manchon 9 est par au moins l'un des ses joints 10 apte à réaliser l'étanchéité avec la première partie 1.

Ainsi, aux figures 7 et 8, le flux de fluide ne circule pas encore entre la première partie 1 et la deuxième partie 2 du connecteur. L'étanchéité entre la première partie 1 et la deuxième partie 2 est d'ores et déjà réalisée par le manchon 9.

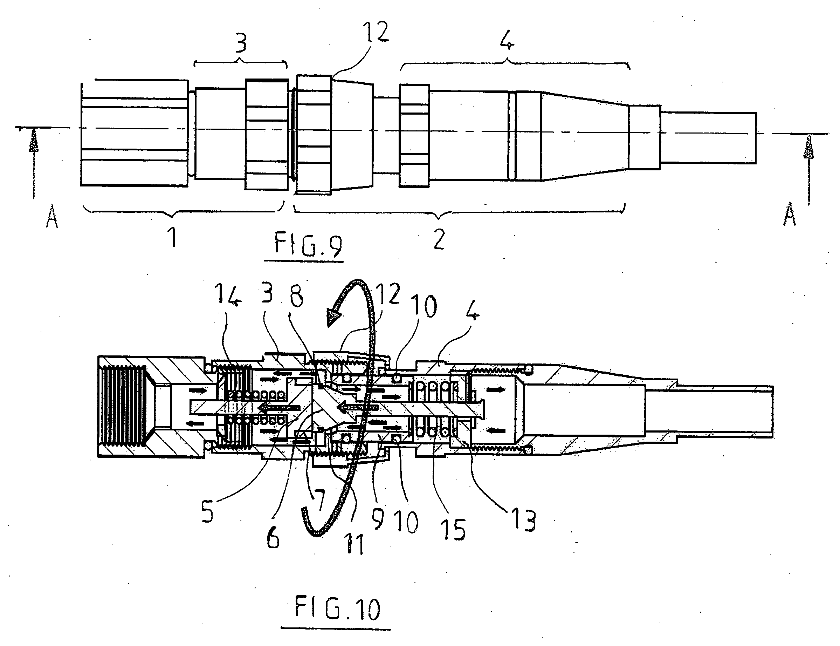

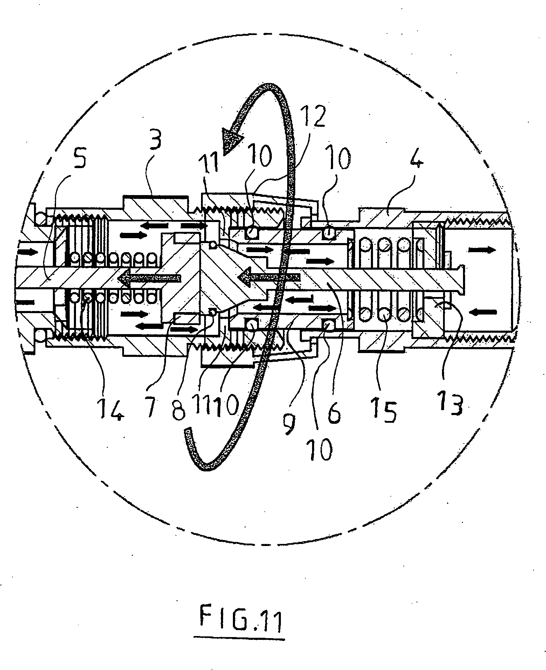

En poursuivant le vissage du moyen de serrage 12 sur son moyen complémentaire, le piston 6 génère un mouvement de recul de la soupape 5 en direction de l'extrémité distale de la première partie 1 supprimant ainsi l'étanchéité entre la soupape 5 et la butée interne 11. De même, ce mouvement éloigne le piston 6 et le manchon 9 et supprime l'étanchéité entre le piston 6 et le manchon 9. Cette étape est représentée en figures 9 à 11. Il y a donc circulation du fluide entre la première partie 1 et la deuxième partie 2 tout en ayant une étanchéité parfaite entre la première partie 1 et la deuxième partie 2 grâce au manchon 9 et à ses joints 10.Lors de cette étape, le manchon 9 et la soupape 5 ont un déplacement en sens opposé. Après cette étape de serrage permettant l'ouverture de la soupape 5 à fond, se faisant avantageusement avec un instrument du type clé, l'extrémité de la première partie 1 présente par exemple un filetage restant non en prise variant de 2,5 mm à 2,75 mm.

A l'inverse, au démontage, lorsque le moyen de serrage 12 et le moyen complémentaire 12a sont désolidarisés, la soupape 5 et le piston 6 sont fermés pour rétablir l'étanchéité de la première partie 1 et de la deuxième partie 2 avant que l'étanchéité entre la première partie 1 et la deuxième partie 2 soit supprimée.

La disposition de la présente invention permet lors du vissage du moyen de serrage 12 de maintenir constamment l'étanchéité entre la première partie 1 et la deuxième partie 2 du fait du déplacement simultané du manchon 9, élément constituant de la deuxième partie 2 et de la première partie 1. En effet, l'appui entre la butée interne 11 et le manchon 9 est constant et perpétuel lors du vissage du moyen de serrage 12 avec son moyen complémentaire 12a.

Cet avantage est notamment dû aux raideurs des ressorts 14-15 étudiées pour disposer d'un système équilibré.

La figure 12 donne un exemple de montage d'un appareil de climatisation comportant le connecteur selon l'invention. Un appareil de climatisation selon l'invention comprend au moins une unité extérieure 16 destinée à être positionnée à l'extérieur du volume à climatiser. Généralement, l'unité extérieure 16 comporte des moyens de convexion forcée disposant d'un ventilateur ainsi qu'un circuit, dit circuit extérieur, dans lequel circule un fluide réfrigérant. En sortie et en entrée du circuit extérieur, des connecteurs sont généralement disposés de sorte à assurer la fermeture du circuit lors des phases de montage et de démontage.

L'appareil comprend, d'autre part, une unité intérieure 17, par exemple constituée d'un bloc mural apte à souffler de l'air à température sélectionnée dans le volume à climatiser. A cet effet, l'unité intérieure 17 comporte un circuit intérieur, pour la circulation du fluide réfrigérant. Les circuits intérieur et extérieur respectivement de l'unité intérieure 17 et de l'unité extérieure 16, en présentant chacun une entrée et une sortie de circuit, sont raccordés respectivement par un des tuyaux 18, 19 de raccordement illustrés également en figure 12.

A la figure 12, les extrémités des tuyaux de raccordement 18, 19 sont solidarisées avec la deuxième partie 2 d'un connecteur respectif selon l'invention. La première partie 1 du connecteur selon l'invention est alors montée respectivement sur l'unité extérieure 16 et l'unité intérieure 17. Ceci n'est pas forcément le cas dans tous les modes de réalisation de l'invention.

Dans une forme préférentielle d'appareil de climatisation, deux tuyaux de raccordement 18, 19 relient respectivement l'entrée du circuit extérieur de l'unité extérieure 16 à la sortie du circuit intérieur de l'unité intérieure 17 ou la sortie du circuit extérieur de l'unité extérieure 16 à l'entrée du circuit intérieur de l'unité intérieure 17, un connecteur étant prévu à chaque extrémité de chaque tuyau 18, 19.

Préférentiellement, chaque connecteur présente un de ses corps longitudinaux respectifs pour les première et deuxième parties 1, 2 comportant le ressort avec la raideur la moins élevée disposé du côté de l'unité intérieure 17 ou extérieure 16 tandis que l'autre corps longitudinal de la première ou deuxième partie 1, 2 comportant le ressort avec la raideur la plus élevée est disposé du côté du tuyau de raccordement 18, 19.

Le connecteur selon l'invention permet d'éviter toute manipulation du fluide réfrigérant sur des machines préchargées en fluide (le fluide est contenu dans le compresseur de l'unité extérieure 16) et évite une mise en service qui consiste en l'extraction du fluide, le tirage au vide et la réintroduction du fluide. On interdit par conséquent tout risque de dégazage ou de fuite lié à de mauvaises manipulations ou à un défaut de matériel.

### REFERENCES

- 1.: Première partie
- 2.: Deuxième partie
- 3.: Premier corps longitudinal
- 4.: Deuxième corps longitudinal
- 5.: Soupape
- 6.: Piston
- 7.: Moyen d'étanchéité de la soupape
- 8.: Moyen d'étanchéité du piston
- 9.: Manchon
- 10.: Joints
- 11.: Butée interne
- 12.: Moyen de serrage
- 12a.: Filetage
- 13.: Bague de maintien
- 14.: Premier ressort
- 15.: Second ressort
- 16.: Unité extérieure
- 17.: Unité intérieure
- 18.: Tuyau
- 19.: Tuyau
- 20.: Partie proximale
- D.: Diamètre
- L.: Longueur
- P.: Pas de vis

## Revendications

1. Connecteur de tuyau de circuit de climatisation comprenant une première partie (1) et une deuxième partie (2) destinées à coopérer de sorte que le connecteur soit alternativement dans une position connectée ou une position déconnectée, la première partie (1) comprenant un premier corps longitudinal (3) ménageant un passage traversant recevant une soupape (5) mobile, ledit passage logeant un premier ressort (14) destiné à maintenir la soupape (5) en contact étanche avec le premier corps longitudinal (3) lorsque le connecteur est en position déconnectée, le corps longitudinal comprenant une butée interne (11) contre laquelle la soupape (5) est destinée à être en contact par défaut sous l'action du premier ressort (14) au moins lorsque le connecteur est en position déconnectée et la deuxième partie (2) comprenant un deuxième corps longitudinal (4) ménageant un passage traversant ainsi qu'un manchon (9) mobile et un piston (6), le piston (6) étant placé au moins partiellement dans le manchon (9) placé au moins partiellement dans le deuxième corps longitudinal (4) et le piston (6) étant fixe relativement au deuxième corps longitudinal (4) au moyen d'une bague de maintien (13) sur laquelle le piston (6) est fixé, un second ressort (15) étant placé entre la bague de maintien (13) et le manchon (9) dans le deuxième corps longitudinal (4) de sorte à maintenir le contact du manchon (9) contre la butée interne (11) du premier corps longitudinal (3) lorsque le connecteur est en position connectée, ledit connecteur étant **caractérisé par le fait que** les raideurs des premier et second ressorts (14, 15) sont identiques ou présentent un écart inférieur à 4 newtons par millimètre de sorte à disposer d'un système équilibré et que la somme des raideurs des deux ressorts est comprise entre 18 et 40 newtons par millimètre.

2. Connecteur selon la revendication précédente, pour lequel les raideurs des ressorts (14, 15) sont chacune comprises entre 7 et 22 N/mm, avec une sélection de valeurs de raideurs pour l'un des ressorts (14, 15) de 7 et 11 N/mm et une sélection de valeurs de raideurs pour l'autre des ressorts (14, 15) de 18 et 22 N/mm.

3. Connecteur selon l'une des deux revendications précédentes, pour lequel le rapport de l'écart des raideurs des premier et second ressorts (14, 15) sur la somme des raideurs des premier et second ressorts (14, 15) varie de 0 à 0,22.

4. Connecteur selon la revendication précédente, pour lequel le rapport est compris entre 0 et 0,1.

5. Connecteur selon l'une quelconque des revendications précédentes, pour lequel une des première (1) ou deuxième (2) parties comprend un filetage extérieur (12a) sur lequel vient se visser un moyen de serrage (12) porté par l'autre des deuxième (2) ou première (1) parties.

6. Connecteur selon la revendication précédente, pour lequel le filetage extérieur (12a) comprend 7 à 10 filets et présente un diamètre extérieur de 20 à 25 mm et une longueur totale de 14 à 15 mm.

7. Connecteur selon l'une quelconque des deux revendications précédentes, pour lequel le moyen de serrage est sous la forme d'une bague (12) recevant en son intérieur le filetage de la première (1) ou deuxième partie (2).

8. Connecteur selon la revendication précédente, pour lequel la bague (12) est portée par la deuxième partie (2), le filetage extérieur (12a) étant porté par l'extrémité de la première partie (1) en vis-à-vis de la deuxième partie (2) lors du montage du connecteur.

9. Connecteur selon l'une quelconque des quatre revendications précédentes, dans lequel le serrage du moyen de serrage (12) entraîne le déplacement de la soupape (5) relativement au premier corps longitudinal (3) par poussée du piston supprimant l'étanchéité de la soupape (5) et le déplacement du manchon (9) relativement au piston (6) supprimant l'étanchéité entre le piston (6) et le manchon (9) de sorte à permettre la circulation du flux entre la première (1) et la deuxième partie (2).

10. Connecteur selon l'une quelconque des revendications précédentes, pour lequel la soupape (5) est munie d'au moins un moyen d'étanchéité (7) assurant l'étanchéité par défaut avec le premier corps longitudinal (3) au moins en position déconnectée.

11. Connecteur selon la revendication précédente, pour lequel au moins le piston (6) est muni d'au moins un moyen d'étanchéité (8) assurant l'étanchéité par défaut avec le manchon (9), le manchon (9) comprenant au moins deux joints (10) dont au moins l'un est destiné à assurer l'étanchéité permanente avec le deuxième corps longitudinal (4) et dont au moins l'autre est destiné à assurer l'étanchéité avec le premier corps (3) lorsque le connecteur est en position connectée.

12. Connecteur selon l'une quelconque des revendications précédentes dans lequel le piston (6) est configuré pour être en contact avec la soupape (5) lorsque le connecteur est en position connectée.

13. Appareil de climatisation comportant une unité extérieure (16) et au moins une unité intérieure (17), les unités extérieure (16) et intérieure (17) comprenant respectivement un circuit intérieur empli d'un fluide réfrigérant ou un circuit extérieur, les deux circuits étant reliés par un connecteur selon l'une quelconque des revendications précédentes.

14. Appareil de climatisation selon la revendication précédente, pour lequel deux tuyaux de raccordement (18, 19) relient respectivement l'entrée, du circuit extérieur de l'unité extérieure (16) à la sortie du circuit intérieur de l'unité intérieure (17) ou la sortie du circuit extérieur de l'unité extérieure (16) à l'entrée du circuit intérieur de l'unité intérieure (17), un connecteur étant prévu à chaque extrémité de chaque tuyau (18, 19).

15. Appareil de climatisation selon la revendication précédente, pour lequel chaque connecteur présente un de ses corps longitudinaux (3, 4) comportant le ressort (14, 15) avec la raideur la moins élevée disposé du côté de l'unité intérieure (17) ou extérieure (16) tandis que l'autre corps longitudinal (4, 3) comportant le ressort (15, 14) avec la raideur la plus élevée est disposé du côté du tuyau de raccordement (18,19).

## Patentansprüche

1. Anschlussstück für den Schlauch eines Klimakreislaufes mit einen ersten Teil (1) und einen zweiten Teil (2), die dazu bestimmt sind, so zusammenzuwirken, dass sich das Anschlussstück abwechselnd in einer angeschlossenen und einer nicht angeschlossenen Position befindet, wobei der erste Teil (1) einen ersten langgestreckten Körper (3) umfasst, der einen Durchgang bildet, in den ein bewegliches Ventil (5) positioniert wird, wobei im Durchgang eine erste Feder (14) aufgenommen wird, die dazu bestimmt ist, das Ventil (5) in dichtem Kontakt zum ersten längsgestreckten Körper (3) zu halten, wenn das Anschlussstück nicht angeschlossen ist, wobei der längsgestreckte Körper einen Innenanschlag (11) aufweist, mit dem das Ventil (5) zumindest unter Einwirkung der ersten Feder (14) in standardmäßigem Kontakt steht, wenn das Anschlussstück nicht angeschlossen ist, und der zweite Teil (2) einen zweiten längsgestreckten Körper (4), der einen Durchgang bildet, sowie eine bewegliche Muffe (9) und einen Kolben (6) aufweist, wobei der Kolben (6) mindestens teilweise in der Muffe (9), die sich zumindest teilweise im zweiten längsgestreckten Körper (4) befindet, positioniert ist, und der Kolben (6) im Verhältnis zum zweiten längsgestreckten Körper (4) durch einen Haltering (13), auf dem der Kolben (6) befestigt ist, feststehend ist, wobei eine zweite Feder (15) zwischen dem Haltering (13) und der Muffe (9) so im zweiten längsgestreckten Körper positioniert wird, dass die Muffe (9) in Kontakt mit dem Innenanschlag (11) des ersten längsgestreckten Körpers (3) gehalten wird, wenn sich das Anschlussstück in angeschlossener Position befindet, wobei besagtes Anschlussstück **dadurch gekennzeichnet ist, dass** die Federkonstanten der ersten und der zweiten Feder (14, 15) identisch sind oder weniger als 4 Newton pro Millimeter voneinander abweichen, so dass ein ausgewogenes System entsteht und die Summe der Federkonstanten der beiden Federn bei 18 bis 40 Newton pro Millimeter liegt.

2. Anschlussstück nach dem vorhergehenden Anspruch, bei dem die Konstanten der Federn (14, 15) jeweils zwischen 7 und 22 N/mm betragen, wobei für eine der Federn (14, 15) Federkonstanten zwischen 7 und 11 N/mm, und für die andere der beiden Federn (14, 15) Federkonstanten zwischen 18 und 22 N/mm ausgewählt werden können.

3. Anschlussstück nach einem der zwei vorhergehenden Ansprüche, bei denen das Verhältnis der Abweichung der Federkonstanten zwischen der ersten und der zweiten Feder (14, 15) in Bezug auf die Summe der Federkonstanten der ersten und der zweiten Feder (14, 15) zwischen 0 und 0,22 liegt.

4. Anschlussstück nach dem vorhergehenden Anspruch, bei dem das Verhältnis zwischen 0 und 0,1 liegt.

5. Anschlussstück nach einem der vorhergehenden Ansprüche, bei dem ein erster (1) oder ein zweiter (2) Teil ein Außengewinde (12a) aufweist, auf welches ein Spannmittel (12) aufgeschraubt wird, das von dem zweiten (2) oder ersten (1) Teil getragen wird.

6. Anschlussstück nach dem vorhergehenden Anspruch, bei dem das Außengewinde (12a) 7 bis 10 Rippen, einen Außendurchmesser von 20 bis 25 mm und eine Gesamtlänge von 14 bis 15 mm aufweist.

7. Anschlussstück nach einem der zwei vorhergehenden Ansprüche, bei dem das Spannmittel die Form eines Ringes (12) aufweist, in dem das Gewinde des ersten (1) oder des zweiten (1) Teils aufgenommen wird.

8. Anschlussstück nach dem vorhergehenden Anspruch, bei dem der Ring vom zweiten Teil (2) getragen wird, wobei das Außengewinde (12a) des Anschlussstücks vom Ende des ersten, während der Montage gegenüber dem zweiten Teil (2) liegenden Teils (1) getragen wird.

9. Anschlussstück nach einem der vier vorhergehenden Ansprüche, bei dem das Spannen des Spannmittels (12) durch Schub des Kolbens dazu führt, dass sich das Ventil (5) im Verhältnis zum ersten längsgestreckten Körper (3) verschiebt, die Dichtheit des Ventils (5) somit aufgehoben wird und durch das Verschieben der Muffe (9) im Verhältnis zum Kolben (6) die Dichtheit zwischen Kolben (6) und Muffe aufgehoben wird und somit die Zirkulation des Stroms zwischen dem ersten (1) und dem zweiten Teil (2) möglich ist.

10. Anschlussstück nach einem der vorhergehenden Ansprüche, bei dem das Ventil (5) mit mindestens einem Dichtmittel (7) versehen ist, welches in Bezug auf den ersten längsgestreckten Körper (3) in der angeschlossenen Position zumindest eine standardmäßige Dichtheit gewährleistet.

11. Anschlussstück nach dem vorhergehenden Anspruch, in dem zumindest der Kolben (6) mit mindestens einem Dichtmittel (8) versehen ist, welches die standardmäßige Dichtheit gegenüber der Muffe (9) gewährleistet, wobei die Muffe (9) mindestens zwei Dichtungen (10) aufweist, von denen mindestens eine dazu bestimmt ist, die dauerhafte Dichte zum zweiten längsgestreckten Gehäuse (4) zu gewährleisten, und mindestens die andere dazu bestimmt ist, die Dichtheit gegenüber dem ersten längsgestreckten Körper (3) zu gewährleisten, wenn sich das Anschlussstück in angeschlossener Position befindet,

12. Anschlussstück nach einem der vorhergehenden Ansprüche, in dem der Kolben (6) so angeordnet ist, dass er in Kontakt mit dem Ventil (5) steht, wenn sich das Anschlussstück in angeschlossener Position befindet.

13. Klimagerät mit einer Außeneinheit (16) und mindestens einer Inneneinheit (17), wobei die Außeneinheit (16) und Inneneinheit (17) jeweils einen inneren Kältemittelkreislauf oder einen äußeren Kreislauf umfassen, wobei die beiden Kreisläufe nach einem der vorhergehenden Ansprüche durch ein Anschlussstück miteinander verbunden sind.

14. Klimagerät nach dem vorhergehenden Ansprüche, bei dem zwei Anschlussschläuche (18, 19) jeweils den Eintritt des äußeren Kreislaufes der Außeneinheit (16) mit dem Austritt des inneren Kreislaufes der Inneneinheit (17) oder den Austritt des äußeren Kreislaufs der Außeneinheit (16) mit dem Eintritt des inneren Kreislaufs der Inneneinheit (17) verbinden, wobei für jedes Ende eines jeden Schlauchs (18, 19) ein Anschlussstück vorgesehen ist.

15. Klimagerät nach dem vorhergehenden Anspruch, wobei jedes Anschlussstück einen längsgestreckten Körper (3, 4) an der Seite der Inneneinheit (17) oder Außeneinheit (16) umfasst, dessen Feder (14, 15) die geringste Federkonstante aufweist, und einen anderen längsgestreckten Körper (4, 3) an der Seite des Anschlussschlauchs (18, 19), dessen Feder (15, 14) die höchste Federkonstante aufweist.

## Claims

1. A connector for an air-conditioning circuit pipe comprising a first part (1) and a second part (2) intended to cooperate so that the connector is alternately in a connected position or a disconnected position, with the first part (1) comprising a first longitudinal body (3) providing a through passage receiving a movable valve (5), with said passage accommodating a first spring (14) intended to hold the valve (5) in sealing contact with the first longitudinal body (3) when the connector is in the disconnected position, with the longitudinal body comprising an internal stop (11) against which the valve (5) is intended to be in contact by default under the action of the first spring (14) at least when the connector is in the disconnected position and the second part (2) comprising a second longitudinal body (4) forming a through passage as well as a movable sleeve (9) and a piston (6), with the piston (6) being positioned at least partially within the sleeve (9) at least partially placed in the second longitudinal body (4) and the piston (6) being stationary relative to the second longitudinal body (4) using a retaining ring (13) whereon the piston (6) is fixed, with a second spring (15) being positioned between the retaining ring (13) and the sleeve (9) in the second longitudinal body (4) so as to maintain the contact of the sleeve (9) against the internal stop (11) of the first longitudinal body (3) when the connector is in the connected position, with said connector being **characterized in that** the stiffness of the first and second springs (14, 15) is identical or has a difference of less than 4 newtons per millimeter so as to have a balanced system and **in that** the summed stiffness of the two springs ranges from 18 to 40 newtons per millimeter.

2. A connector according to the preceding claim, wherein the stiffness of the springs (14, 15) each ranges from 7 to 22N/mm, with a selection of stiffness values for one of the springs (14, 15) of 7 and 11N/mm and a selection of stiffness values for the other spring (14, 15) of 18 and 22N/mm.

3. A connector according to one of the preceding two claims, wherein the ratio of the difference in the stiffness of the first and second springs (14, 15) to the summed stiffness of the first and second springs (14, 15) varies from 0 to 0.22.

4. A connector according to the preceding claim, wherein the ratio ranges from 0 to 0.1.

5. A connector according to any one of the preceding claims, wherein one of the first (1) or second (2) parts comprises an external thread (12a) whereon clamping means (12) carried by the other one of the second (2) or first (1) parts is screwed.

6. A connector according to the preceding claim, wherein the external thread (12a) comprises 7 to 10 threads and has an outer diameter of 20 to 25mm and a total length of 14 to 15mm.

7. A connector according to one of the preceding two claims, wherein the clamping means is in the form of a ring (12) receiving inside the thread of the first (1) or second part (2).

8. A connector according to the preceding claim, wherein the ring (12) is carried by the second part (2), with the external thread (12a) being carried by the end of the first part (1) opposite the second part (2) when mounting the connector.

9. A connector according to any one of the preceding four claims, wherein the tightening of the clamping means (12) causes the displacement of the valve (5) relative to the first longitudinal body (3) by pushing the piston, which cancels the sealing of the valve (5) and the displacement of the sleeve (9) relative to the piston (6) cancelling the sealing between the piston (6) and the sleeve (9) so as to enable the circulation of the flow between the first (1) and the second part (2).

10. A connector according to any one of the preceding claims, wherein the valve (5) is provided with at least one sealing unit (7) providing sealing by default the first longitudinal body (3), at least in the disconnected position.

11. A connector according to the preceding claim, wherein at least the piston (6) is provided with at least one sealing unit (8) providing sealing by default with the sleeve (9), with the sleeve (9) comprising at least two seals (10), at least one of which is intended to provide permanent sealing with the second longitudinal body (4), and at least the other one of which is intended to provide sealing with the first body (3) when the connector is in the connected position.

12. A connector according to any one of the preceding claims, wherein the piston (6) is so configured as to be in contact with the valve (5) when the connector is in the connected position.

13. An air conditioning device comprising an outer unit (16) and at least one inner unit (17), with the outer (16) and inner (17) units respectively comprising an inner circuit filled with a cooling fluid or an outer circuit, with both circuits being connected by a connector according to any one of the preceding claims.

14. An air conditioning device according to the preceding claim, wherein two connecting pipes (18, 19) respectively connect the input of the outer circuit of the outer unit (16) to the output of the inner circuit of the inner unit (17) or the output of the outer circuit of the outer unit (16) to the input of the inner circuit of the inner unit (17), with a connector being provided at each end of each pipe (18, 19).

15. An air conditioning device according to the preceding claim, wherein each connector has one of its longitudinal bodies (3, 4) comprising the spring (14, 15) with the lowest stiffness positioned on the inner (17) or outer (16) unit side, whereas the other longitudinal body (4, 3) comprising the spring (15, 14) with the highest stiffness is positioned on the connecting pipe (18, 19) side.
